# EUROPÄISCHE PATENTANMELDUNG

(11) **EP 1 930 228 A2**
(43) Veröffentlichungstag der Anmeldung: **11.06.2008**
(21) Anmeldenummer: 07022817.6
(22) Anmeldetag: 24.11.2007
(51) Int. Cl.: B62B 1/14

(54) **Transportvorrichtung**

(30) Priorität: 07.12.2006 DE 102006058075; 18.05.2007 DE 102007023366
(71) Anmelder: J. Wagner GmbH, 88677 Markdorf (DE)
(72) Erfinder: Sorg, Viktor, Dipl.-Ing. (FH), 88682 Salem (DE); Welte, Christoph, Dipl. Betriebswirt (FH), 88662 Überlingen (DE); Stecher, Jürgen, 88097 Mariabrunn (DE)
(74) Vertreter: Engelhardt & Engelhardt

(57) **Zusammenfassung**

Bei einem Fahrgestell (1) zum Transport einer aus einem Antriebsmotor (4) und einer Förderpumpe (3) bestehenden Vorrichtung (2) zum Fördern und/oder Verarbeiten von fließfähigen Medien, deren Förderpumpe (3) in einen Vorratsbehälter (10) einsetzbar ist und das einen aus Hohlprofilen (13,14,15) gebildeten, verfahrbaren Tragrahmen (11) aufweist, ist dieser zur Aufnahme der Fördervorrichtung (2) mit zwei mit seitlichem Abstand zueinander angeordneten Wangen (21,22) versehen, in denen diametral einander gegenüberliegend Stütz- oder Steuerkurven (23,24) eingearbeitet sind. Außerdem sind der Antriebsmotor (4), ein zugeordnetes Getriebe (5) und/oder die Förderpumpe (3) auf jeder Seite mit mindestens zwei Führungsbolzen (31,32) ausgestattet, die in die Stützkurven (23,24) eingreifen.

## Beschreibung

Die Erfindung bezieht sich auf ein Fahrgestell zum Transport einer aus einem Antriebsmotor und einer Förderpumpe bestehenden Vorrichtung zum Fördern und/oder Verarbeiten von fließfähigen Medien, wie zum Beispiel Mörtel, Zementmischungen und dgl., deren Förderpumpe in einen das zu verarbeitende Medium aufnehmenden Vorratsbehälter einsetzbar ist und das einen aus L-förmig gestalteten Hohlprofilen gebildeten und mit Laufrädern versehen Tragrahmen aufweist.

Eine Fördervorrichtung dieser Art ist der DE 195 42 527 zu entnehmen. Die als Schneckenpumpe ausgebildete Förderpumpe ist hierbei mittels eines in besonderer Weise gestalteten Klemmstückes an dem Fahrgestell befestigt, auf dem auch der Vorratsbehälter zur Aufnahme des zu verarbeitenden Mediums abgestellt ist. Der Bauaufwand zur Abstützung der Fördervorrichtung sowie des Vorratsbehälters ist somit erheblich. Vor allem aber ist von Nachteil, dass das Auswechseln des Vorratsbehälters sehr zeitaufwendig und schwierig ist, da die Klemmverbindung zwischen einem dem Antriebsmotor nachgeschalteten Untersetzungsgetriebe und dem Traggestell zu lösen ist. Außerdem ist die Förderpumpe mit Untersetzungsgetriebe und Antriebsmotor vertikal aus dem Vorratsbehälter zu heben, bevor dieser ebenfalls von dem Traggestell abgenommen werden kann. Zum Austausch eines Vorratsbehälters sind somit mitunter zwei Personen erforderlich, so dass der Einsatzbereich der bekannten Vorrichtung bei aufwendiger Handhabung auf größere Baustellen beschränkt ist.

Aufgabe der Erfindung ist es daher, ein Fahrgestell zum Transport einer Fördervorrichtung der vorgenannten Gattung zu schaffen, mittels dem es möglich ist, ein Auswechseln eines Vorratsbehälters in sehr kurzer Zeit und in äußerst einfacher Weise von nur einer Person zu bewerkstelligen. Die Fördervorrichtung soll dabei ohne Schwierigkeiten von dem Fahrgestell gelöst und in unterschiedlichen Betriebsstellungen arretiert werden können, auch soll das Traggestell leicht bauen und wirtschaftlich herzustellen sein.

Gemäß der Erfindung wird dies dadurch erreicht, dass der Tragrahmen zur Aufnahme der Fördervorrichtung mit zwei mit seitlichem Abstand zueinander angeordneten Wangen versehen ist, in denen diametral einander gegenüberliegend Stütz- oder Steuerkurven oder Führungskulissen eingearbeitet sind, und dass der Antriebsmotor, ein zugeordnetes Getriebe und/oder die Förderpumpe der Fördervorrichtung auf jeder Seite mit mindestens zwei Führungsbolzen versehen sind, die in die Stützkurven der Wangen eingreifen.

Zweckmäßig ist es hierbei, die Stützkurven mit Rastausnehmungen zu versehen, in die die an der Fördervorrichtung angebrachten Führungsbolzen in unterschiedlichen Winkellagen der Fördervorrichtung einsetzbar sind, wobei der Abstand der an der Fördervorrichtung angebrachten Führungsbolzen dem Abstand der zugeordneten Ausnehmung in den Wangen entsprechen und diese auch mit in unterschiedlichen Höhenlagen angeordneten Rastausnehmungen versehen sein sollten. Hierbei ist es des Weiteren angebracht, die Wangen des Tragrahmens jeweils mit zumindest einer Transportstellung der Fördervorrichtung und einer Montagestellung der Förderpumpe zugeordneten Rastausnehmungen zu versehen.

Die Führungsbolzen sollten jeweils aus einer vorzugsweise mit Gleitbuchsen versehenen Stange, die die in die Wangen eingearbeiteten Stützkurven durchgreifen, und einem auf der Stange angebrachten auf der Außenseite an der Wange anliegenden Anschlag gebildet sein.

Der Tragrahmen kann in einfacher Weise aus zwei vorzugsweise einstückigen mit seitlichem Abstand zueinander angeordneten Holmen, die z-förmig gekröpft sich im unteren Bereich des Fahrgestells nach außen erweiternd ausgebildet sind, und von den unteren Enden der Holme horizontal abstehenden weiteren Holmen zusammengesetzt sein, wobei, um einen stets sicheren Stand zu gewährleisten, die Laufräder derart an dem Tragrahmen angebracht sein sollten, dass deren Laufflächen gegenüber den Standflächen der horizontal verlaufenden Holme des Tragrahmens in der Höhe geringfügig zurückgesetzt verlaufen.

Außerdem sollten die Wangen auf den beiden Innenseiten der vertikalen Holme des Tragrahmens angebracht sein.

Wird ein Fahrgestell gemäß der Erfindung ausgebildet, so ist nicht nur gewährleistet, dass beim Verarbeiten des in einem Vorratsbehälter befindlichen Mediums eine sichere Abstützung der Fördervorrichtung gegeben ist, sondern dass vor allem die Handhabung beim Auswechseln eines entleerten gegen einen befüllten Vorratsbehälter sehr erleichtert wird. Das Fahrgestell, in dem die Fördervorrichtung abgestützt ist, ist nämlich bei Arbeitsvorgängen großflächig über die horizontal gerichteten Holme abgestützt, dennoch ist die Fördervorrichtung sicher in den Wangen des Tragrahmens arretiert und beim Auswechseln der Vorratsbehälter kann die Fördervorrichtung leicht in eine Position verschwenkt werden, die einen Austausch durch nur eine Person in kurzer Zeit ermöglicht.

Der Bauaufwand, durch den insbesondere die einfache Handhabung ermöglicht wird, ist gering, da das Fahrgestell als Schweißkonstruktion aus Halbfabrikaten herzustellen ist und somit leicht baut. Es wird auf diese Weise eine kleine mobile Anlage geschaffen, deren einzelne Bauteile ohne Schwierigkeiten von nur einer Person zu transportieren und zu bedienen sind und die des Weiteren Montagearbeiten an der Fördervorrichtung erlaubt und zum Mischen des zu verarbeitenden Mediums verwendbar ist. Bei einfacher Ausgestaltung ist demnach ein vielseitiger Einsatz des vorschlagsgemäß ausgebildeten Fahrgestells mit zugeordneter Fördereinrichtung gegeben.

In der Zeichnung ist ein Ausführungsbeispiel eines gemäß der Erfindung ausgebildeten Fahrgestells zum Transport einer Fördervorrichtung dargestellt, das nachfolgend im Einzelnen erläutert ist. Hierbei zeigt:
- Figur 1: das Fahrgestell mit in dieses eingesetzter Fördervorrichtung, in Seitenansicht,
- Figur 2: das Fahrgestell mit Fördervorrichtung nach Figur 1, in Vorderansicht,
- Figur 3: das Fahrgestell nach Figur 1 mit Fördervorrichtung in, Transportstellung bzw. beim Auswechseln eines Vorratsbehälters,
- Figur 4: das Fahrgestell nach Figur 1 mit Fördervorrichtung, in einer Montagestellung und
- Figur 5: das Fahrgestell nach den Figuren 1 und 2 mit mit einem Mixer versehener Antriebseinheit.

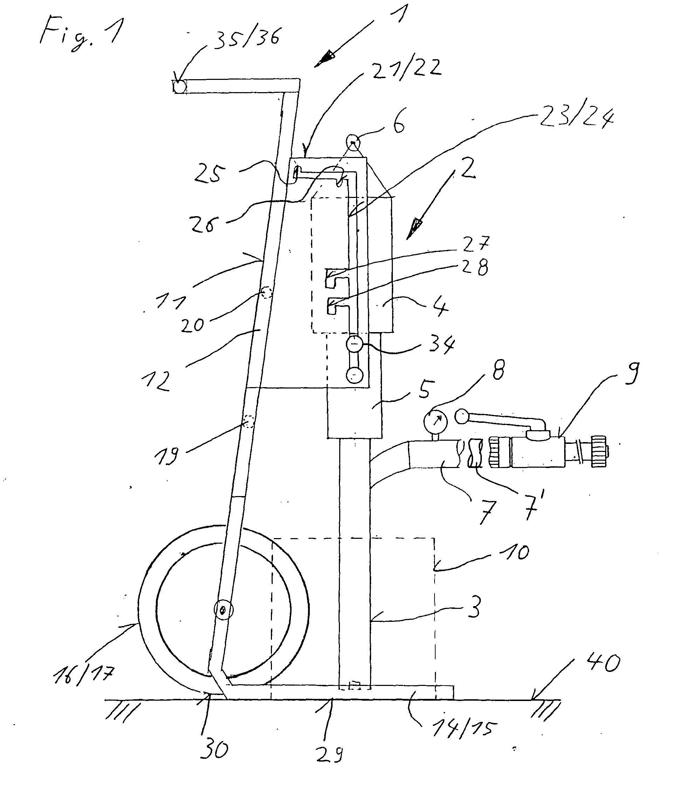

Das in den Figuren 1 bis 5 dargestellte und mit 1 bezeichnete Fahrgestell dient zum Transport einer Fördervorrichtung 2, die aus einer als Schneckenpumpe ausgebildeten Förderpumpe 3, einem dieser zugeordneten mit einer Fernbedienung ausgestatteten Antriebsmotor 4 und einem Untersetzungsgetriebe 5 besteht und mittels der ein zähflüssiges Medium, wie z.B. Mörtel, aus einem Vorratsbehälter 10 einem Schlauch 7' zuführbar ist, an dessen Ende ein Spritzgerät 9 angebracht ist. Das in dem Vorratsbehälter 10 befindliche Medium kann somit je nach Länge des Schlauches 7, der an einem mit einem Manometer 8 versehenen Anschlussstück 7 befestigt ist, mit Hilfe des Spritzgerätes 9 in einem größeren Umkreis, z.B. als Putz auf eine Hauswand, aufgetragen werden.

Das Fahrgestell 1 ist hierbei als Tragrahmen 11 ausgebildet, der aus zwei vertikal verlaufenden Holmen 12 und 13 sowie zwei von diesen an deren unteren Ende horizontal abstehenden Holmen 14 und 15 zusammengesetzt ist. Die Holme 12 und 13, die im unteren Bereich z-förmig nach außen abgekröpft sind, sind mit auf einer Achse 18 drehbar angeordneten Laufrädern 16 und 17 versehen, außerdem sind die Holme 12 und 13, deren oberen Enden als Griffstücke 35 und 36 gestaltet sind, zur Erhöhung der Stabilität durch Querstreben 19 und 20 miteinander verbunden.

Zur Halterung der Fördervorrichtung 2 sind auf den Innenseiten der Holme 12 und 13 Wangen 21 und 22 angebracht, in die diametral einander gegenüberliegend winkelige Stützkurven 23 und 24 eingearbeitet sind. Und an dem Untersetzungsgetriebe 5 sind auf beiden Seiten jeweils zwei abstehende Führungsbolzen 31 und 32 befestigt, die in die Stützkurven 23 bzw. 24 eingreifen. Die Führungsbolzen 31 und 32 bestehen hierbei jeweils aus einer Stange 33 und einem auf diesen angeordneten Anschlag 34, z.B. in Form einer Scheibe, die außen an den Wangen 21 bzw. 22 anliegen. Auf diese Weise ist die Fördervorrichtung 2 sicher in dem Tragrahmen 11 zentriert.

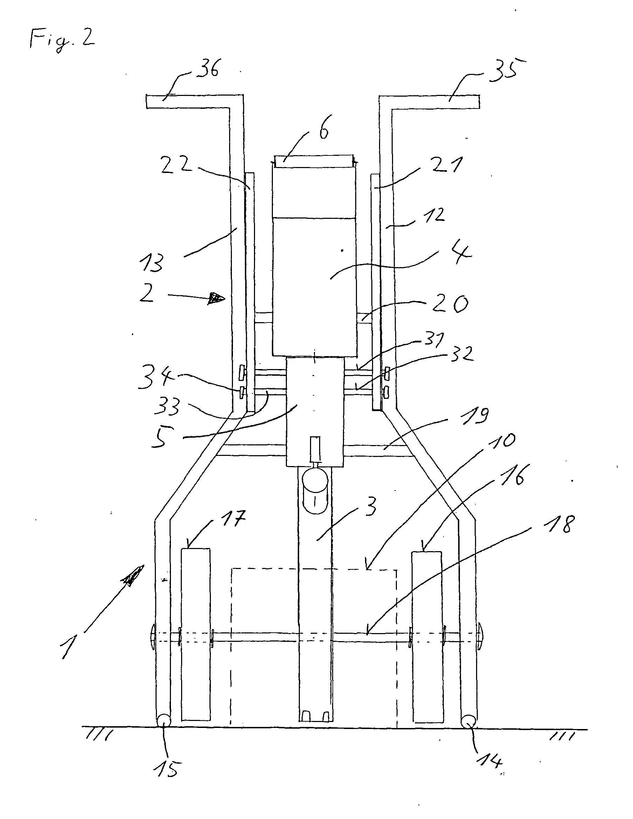

Um die Fördervorrichtung 2 in unterschiedlichen Lagen, wie dies in den Figuren 1, 3 und 4 gezeigt ist, in dem Fahrgestell 1 positionieren zu können, sind die Stützkurven 23, 24 mit Rastausnehmungen 25 und 26 versehen, in denen die Führungsbolzen 31 gehalten sind. Gemäß den Figuren 1 und 2 liegen die Führungsbolzen 32 auf den Stützkurven 23 und 24 auf, die Förderpumpe 3 taucht in dieser Lage in den auf einem Untergrund 40 abgestellten Vorratsbehälter 10 ein, so dass das bevorratete Material zu dem Spritzgerät 9 gefördert werden kann.

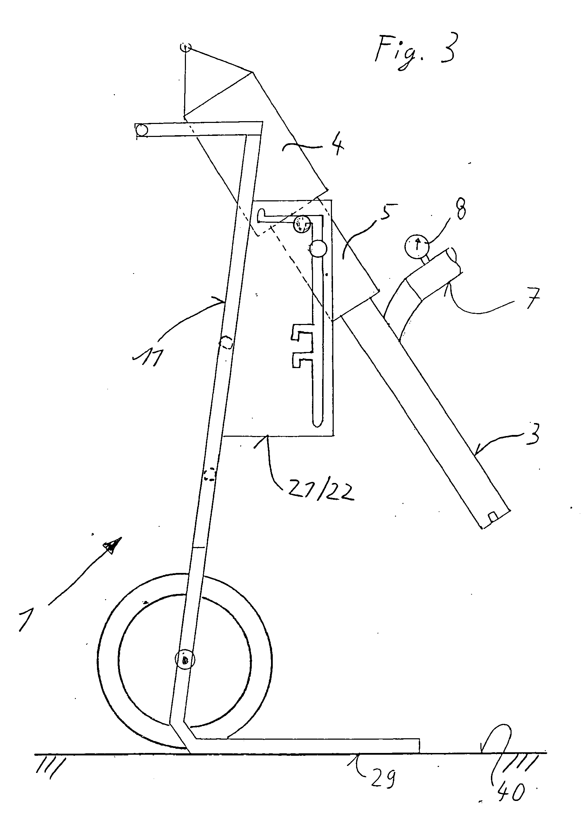

In der in Figur 3 wiedergegebenen Stellung sind die Führungsbolzen 31 in den Rastausnehmungen 26 der Wangen 21 und 22 gehalten. Die Fördervorrichtung 2 befindet sich somit in einer Schrägstellung, so dass ein Transport der Fördervorrichtung 2 mittels des Fahrgestells 1 zu bewerkstelligen ist oder der Vorratsbehälter 10 leicht ausgetauscht werden kann. Um die Fördervorrichtung 2 in diese Betriebsstellung zu bringen, ist diese lediglich mit Hilfe eines an dem Antriebsmotor 4 angebrachten Griffstückes anzuheben und die Führungsbolzen 31 sind in die Rastausnehmungen 26 einzurasten.

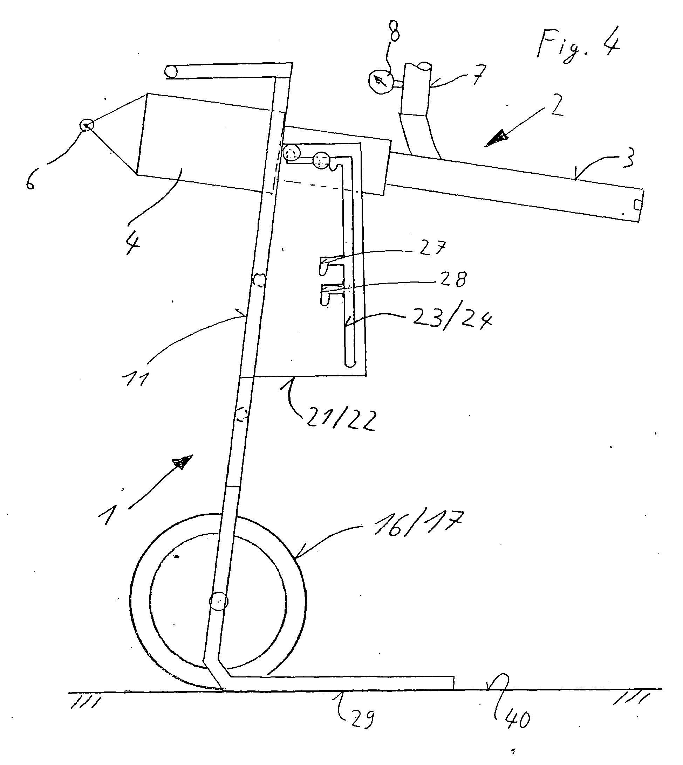

Werden dagegen, wie dies in Figur 4 gezeigt ist, die Führungsbolzen 31 in die Rastausnehmungen 25 eingeführt, nimmt die Fördervorrichtung 2 eine nahezu horizontale Lage ein, in der z.B. Reparaturarbeiten an der Förderpumpe 3 leicht ausgeführt werden können.

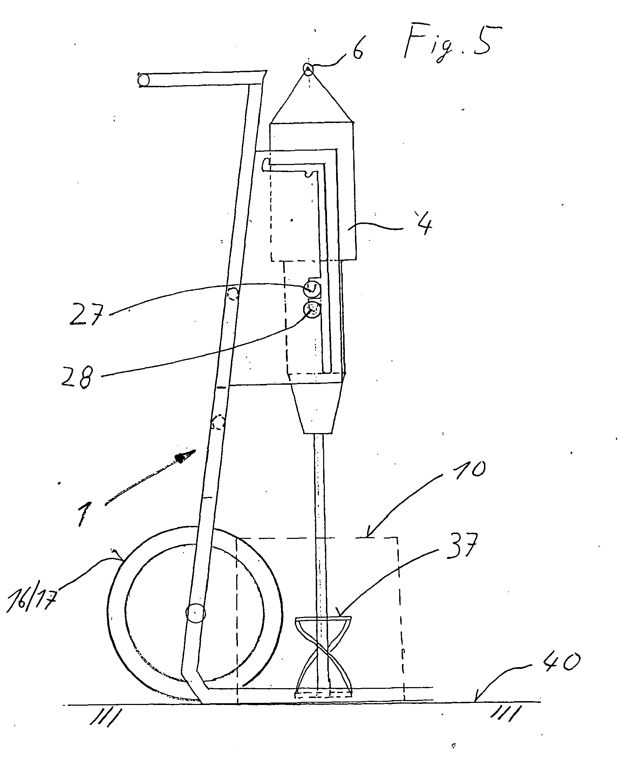

Gemäß Figur 5 sind die Wangen 21 und 22 mit weiteren Rastausnehmungen 27 und 28 versehen, in die die Führungsbolzen 31 und 32 eingehängt werden können. An Stelle der Förderpumpe 5 ist in diesem Fall ein Mixer 37 an dem Untersetzungsgetriebe 5 angebracht, um das zu verarbeitende Medium in dem Vorratsbehälter 10 durchzumischen. Selbstverständlich können in den Wangen 21, 22 auch mehrere in der Höhe versetzt angeordnete Rastausnehmungen 27, 28 eingearbeitet werden, um die Fördervorrichtung 2 in verschiedenen Höhenlagen positionieren zu können. Dies ist u.U. bei unterschiedlich ausgebildeten Vorratsbehältern erforderlich.

Durch die beiden jeweils in den Stützkurven 33 und 34 geführten Führungsbolzen 31 und 32 ist gewährleistet, dass die Fördervorrichtung 2 stets sicher in den Stützkurven bzw. den Rastausnehmungen 25, 26 bzw. 27, 28 gehalten ist. Auch sind die Laufflächen 30 der Laufräder 16 und 17 vertikal geringfügig in der Höhe gegenüber den Standflächen 29 der Holme 14 und 15 zurückgesetzt. Um das Fahrgestell 2 verfahren zu können, ist somit der Tragrahmen 11 derart zu kippen, dass die Laufflächen 30 der Laufräder 16 und 17 auf dem Untergrund 40 aufliegen. In den einzelnen Betriebsstellungen gemäß den Figuren 1 bis 5 ist aber, da der Tragrahmen 12 mittels der Holme 14 und 15 auf dem Untergrund 40 abgestützt ist, eine stets sichere Halterung der Fördervorrichtung 2 gewährleistet.

## Patentansprüche

1. Fahrgestell (1) zum Transport einer aus einem Antriebsmotor (4) und einer Förderpumpe (3) bestehenden Vorrichtung (2) zum Fördern und/oder Verarbeiten von fließfähigen Medien, wie zum Beispiel Mörtel, Zementmischungen und dgl., deren Förderpumpe (3) in einen das zu verarbeitende Medium aufnehmenden Vorratsbehälter (10) einsetzbar ist und das einen aus L-förmig gestalteten Hohlprofilen (12, 13, 14, 15) gebildeten und mit Laufrädern (16, 17) versehenen Tragrahmen (11) aufweist.
**dadurch gekennzeichnet,**
**dass** der Tragrahmen (11) zur Aufnahme der Fördervorrichtung (2) mit zwei mit seitlichem Abstand zueinander angeordneten Wangen (21, 22) versehen ist, in denen diametral einander gegenüberliegend Stütz- oder Steuerkurven (23, 24) oder Führungskulissen eingearbeitet sind, und dass der Antriebsmotor (4), ein zugeordnetes Getriebe (5) und/oder die Förderpumpe (3) der Fördervorrichtung (2) auf jeder Seite mit mindestens zwei Führungsbolzen (31, 32) versehen sind, die in die Stützkurven (23, 24) der Wangen (21, 22) eingreifen.

2. Fahrgestell nach Anspruch 1,
**dadurch gekennzeichnet,**
**dass** die Stützkurven (23, 24) mit Rastausnehmungen (25, 26) versehen sind, in die die an der Fördervorrichtung (2) angebrachten Führungsbolzen (31, 32) in unterschiedlichen Winkellagen der Fördervorrichtung (2) einsetzbar sind.

3. Fahrgestell nach Anspruch 1 oder 2,
**dadurch gekennzeichnet,**
**dass** der Abstand der an der Fördervorrichtung (2) angebrachten Führungsbolzen (31, 32) dem Abstand der zugeordneten Ausnehmung (27, 28) in den Wangen (21, 22) entspricht.

4. Fahrgestell nach Anspruch 3,
**dadurch gekennzeichnet,**
**dass** die Wangen (21, 22) des Tragrahmens (11) mit in unterschiedlichen Höhenlagen angeordneten Rastausnehmungen (27, 28) versehen sind.

5. Fahrgestell nach Anspruch 4,
**dadurch gekennzeichnet,**
**dass** die Wangen (21, 22) des Tragrahmens (11) jeweils mit zumindest einer Transportstellung der Fördervorrichtung (2) und einer Montagestellung der Förderpumpe (3) zugeordneten Rastausnehmungen (26, bzw. 25) versehen sind.

6. Fahrgestell nach Anspruch 1 bis 5,
**dadurch gekennzeichnet,**
**dass** die Führungsbolzen (31, 32) jeweils aus einer vorzugsweise mit Gleitbuchsen versehenene Stange (33), die die in den Wangen (21, 22) eingearbeitete Stützkurven (23, 24) durchgreifen, und einem auf der Stange (33) angebrachten, auf der Außenseite der Wangen (21, 22) anliegenden Anschlag (34) gebildet sind.

7. Fahrgestell nach Anspruch 1 bis 6,
**dadurch gekennzeichnet,**
**dass** der Tragrahmen (11) aus zwei vorzugsweise einstückigen, mit seitlichem Abstand zueinander angeordneten Holmen (12, 13), die z-förmig gekröpft sich im unteren Bereich des Tragrahmens (11) nach außen erweiternd ausgebildet sind, und von den unteren Enden der Holme (12, 13) horizontal abstehenden Holmen (14, 15) zusammengesetzt ist.

8. Fahrgestell nach Anspruch 7,
**dadurch gekennzeichnet,**
**dass** die Laufräder (16, 17) derart an dem Tragrahmen (11) angebracht sind, dass deren Laufflächen (30) gegenüber den Standflächen(29) der horizontal verlaufenden Holme (14, 15) des Tragrahmens (11) in der Höhe geringfügig zurückgesetzt verlaufen.

9. Fahrgestell nach Anspruch 1 bis 8,
**dadurch gekennzeichnet,**
**dass** die Wangen (21, 22) auf den beiden Innenseiten der vertikalen Holme (12, 13) des Tragrahmens (11) angebracht sind.
